Europäisches Patentamt

European Patent Office

Office européen des brevets

(11) Veröffentlichungsnummer: **0 021 408**
**A1**

(12) **EUROPÄISCHE PATENTANMELDUNG**

(21) Anmeldenummer: **80103569.2**

(22) Anmeldetag: **24.06.80**

(51) Int. Cl.³: **A 23 K 1/16**

(30) Priorität: **29.06.79 DE 2926282**

(43) Veröffentlichungstag der Anmeldung: **07.01.81**
**Patentblatt 81/1**

(84) Benannte Vertragsstaaten: **BE DE FR GB**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Der Erfinder hat auf seine Nennung verzichtet**

(54) **Tiernahrung, Verfahren zu deren Herstellung und Futterzusatzmittel, bestehend aus Alkansulfonaten.**

(57)  Sekundäre Alkansulfonate, die sich von geradkettigen Paraffinkohlenwasserstoffen mit 10 bis 21 C-Atomen ableiten, werden mit flüssiger oder fester Tiernahrung oder mit galenischen Hilfs- und Zusatzstoffen gemischt und gegebenenfalls in eine für die orale Verabreichung geeignete Applikationsform gebracht. Der Zusatz von Alkansulfonaten zum Tierfutter führt zu einer deutlichen Lebensverlängerung der Tiere.

EP 0 021 408 A1

HOECHST AKTIENGESELLSCHAFT   HOE 79/F 160        0021408
Dr. KA/Fr

Tiernahrung, Verfahren zu deren Herstellung und Futterzusatzmittel, bestehend aus Alkansulfonaten

Gegenstand der Erfindung ist die Verwendung von Alkansulfonaten zur Lebensverlängerung von Tieren. Gegenstand
der Erfindung ist somit weiterhin eine Tiernahrung, die
durch einen Gehalt an Alkansulfonaten gekennzeichnet ist.

Die Lebensverlängerung von Tieren, wie beispielsweise von
Haustieren, wie z.B. Hunden oder Katzen, kann für den Tierliebhaber ein echtes Anliegen sein. Auch die Verlängerung
des Lebens von Versuchstieren, wie beispielsweise Ratten,
ist z.B dann von Interesse, wenn Langzeitversuche an diesen
Tieren durchgeführt werden sollen.

Überraschenderweise wurde nun gefunden, daß ein Zusatz von
Alkansulfonaten zum Tierfutter zu einer deutlichen Lebensverlängerung der Tiere führte.

Als Alkansulfonate kommen erfindungsgemäß in Betracht
sekundäre Alkansulfonate, die sich von geradkettigen
Paraffinkohlenwasserstoffen mit 10 bis 21 C-Atomen, vorzugsweise 13 bis 17 C-Atomen ableiten und die bis zu etwa
30 % Di- und Polysulfonate enthalten können.

Sie können erhalten werden nach einem in European Chemical
News Normal Paraffins Supplement, Heft vom 2.12.1966,
Seiten 36 - 40, beschriebenen Sulfoxidationsverfahren.
Bei der technischen Herstellung fallen im allgemeinen Gemische von Alkansulfonaten mit unterschiedlicher Kettenlänge an.

Erfindungsgemäß lassen sich bereits derartige Gemische einsetzen, die z.B. vorzugsweise die folgende C-Kettenverteilung besitzen können

$$\begin{array}{ll} \text{bis } C_{13}: & 5\ \% \\ C_{14}: & 20 - 30\ \% \\ C_{15}: & 27 - 33\ \% \\ C_{16}: & 22 - 28\ \% \\ C_{17}: & 10 - 20\ \% \\ C_{18}: & 5\ \%. \end{array}$$

Die erfindungsgemäß verwendeten Sulfonate liegen in der Regel als Alkali- oder Magnesiumsalze, vorzugsweise als Natrium- oder Kaliumsalze vor.

Die Sulfonate können den Tieren als solche, insbesondere jedoch zusammen mit der Tiernahrung verabreicht werden.

Unter Tiernahrung ist hierbei jegliche flüssige oder feste, zur Aufnahme durch das Tier bestimmte Nahrung zu verstehen. So kommen beispielsweise in Betracht Lösungen oder Suspensionen in Wasser, Milch oder Mischungen mit festen Nahrungsstoffen, wie z.B. Kleie, Mehl, Fleisch, Faserstoffe usw.

Sollen die Alkansulfonate beispielsweise an Hunde oder Katzen verabreicht werden, so können sie unter die üblichen, auch im Handel erhältlichen Futtermittel, die insbesondere aus bestimmten Kombinationen verschiedener Fleischarten bestehen, untergemischt werden. Eine weitere bevorzugte Anwendungsform wäre beispielsweise die Einarbeitung der Alkansulfonate in Trockenfutter, wie z.B. Hundekuchen oder Halbtrockenfutter.

Die Menge, in der die Alkansulfonate zur Tiernahrung zugefügt werden, hängt von den jeweils in Betracht kommenden Tieren, den eingesetzten Sulfonaten und ihrem Mischungsverhältnis ab.

So ist es beispielsweise möglich, 0,05 bis 5 % von Decyl- bis Heneicosylsulfonaten zur Tiernahrung zuzugeben. Vorzugsweise kommen Mengen von 0,5 bis 2 % eines Gemisches von Tridecyl- bis Heptadecylsulfonat in Betracht.

Die Alkansulfonate können in an sich bekannter Weise durch Einmischen, Einrühren, Schütteln, Mahlen und gegebenenfalls nachträgliches Trocknen und Backen in das Futter eingearbeitet werden. Sie können der gesamten Tagesration, oder auch nur zu einem Teil des Gesamtfutters hinzugegeben werden.

Erfindungsgemäß können die Alkansulfonate dem Tier beispielsweise auch in Form einer beispielsweise aus der Pharmazie bekannten festen oder flüssigen Zubereitung, beispielsweise einer Tablette, Kapsel, eines Granulats, Saftes oder Sirups direkt oral verabreicht werden. Die Gabe einer solchen Zubereitung kann vor, während oder nach der Fütterung erfolgen. Für die Verabreichung in Form von Tabletten, Kapseln, Pillen, Granulaten usw. können die gleichen Hilfs- und Zusatzstoffe zugefügt werden, wie sie üblicherweise aus der pharmazeutischen Technik bekannt sind. Die Alkansulfonate können so beispielsweise mit pulverförmigen Verdünnungsmitteln, wie z.B. Zucker oder Stärke zum Ausfüllen des Kapselvolumens vermischt werden. Die Herstellung der Tabletten kann ebenfalls auf übliche Weise unter Zugabe von Substanzen, wie beispielsweise Cellulose, Lactose, anorganischen Füllstoffen, wie z.B. Bentonit, Calciumcarbonat oder Kieselsäure, Natriumchlorid, Bindemitteln usw. erfolgen. Auch für die Herstellung von flüssigen Zubereitungen können die in der Pharmazie üblichen Hilfsstoffe, wie beispielsweise Pflanzenöle, Suspendierhilfsmittel, Emulgatoren usw. herangezogen werden.

Kommt eine Verabreichung in Form von beispielsweise Tabletten, Kapseln usw. in Betracht, so sollte sie zweckmäßigerweise zusammen mit dem Futter erfolgen, wobei die Dosierung von einer solchen Verabreichungseinheit so zu wählen wäre, daß sie der Menge entspricht, die man bei direkter Zugabe der

BAD ORIGINAL

Sulfonate zum Futter hinzugegeben hätte. In Abhängigkeit von der Tierart könnte so beispielsweise eine Verabreichungseinheit zwischen etwa 10 und 100 mg Alkansulfonat enthalten.

Zum Nachweis eines deutlichen lebensverlängernden Effektes wurden dem Trockenfutter von Ratten Alkansulfonate zugesetzt. Im einzelnen wurde folgende Versuchsdurchführung gewählt.

Es wurden Ratten, CD-Stamm der Firma Charles River U.K. Ltd., Margate/England verwendet. Die Tiere waren 4 Wochen alt und im Gewichtsbereich von 60 bis 80 g. Während einer 10-tägigen Akklimatisationsperiode wurden alle Tiere entfernt, die keine ausreichende Gewichtszunahme zeigten. Danach wurden 4 Gruppen (1 Kontroll-, 3 Versuchsgruppen, wie weiter unten näher erläutert) von jeweils 50 männlichen Ratten dem folgenden Versuchsprogramm unterworfen. Sie erhielten Trinkwasser und getrocknetes Nagetierfutter der Firma Spratts Laboratory Animal Diet No. 2 ad libitum. Das Futter hatte die folgende Zusammensetzung:

| Zusammensetzung | Gehalt |
|---|---|
| Feuchtigkeit | 8,0 % |
| Fett | 4,5 % |
| Protein | 21,5 % |
| Faserstoffe | 2,7 % |
| Verdaubare Nahrungsstoffe | 78,0 % |
| Lysin | 1,1 % |
| Methionin | 0,4 % |
| Calcium | 0,9 % |
| Phosphor | 0,8 % |
| Mangan | 65 ppm |
| Eisen | 100 ppm |
| Jod | 0,5 ppm |
| Kupfer | 20 ppm |
| Zink | 40 ppm |

| Zusammensetzung (Forts.) | Gehalt |
|---|---|
| Kobalt | 1 ppm |
| Vitamin A | 11.000 IE/kg |
| Vitamin $D_3$ | 1.200 IE/kg |
| $\alpha$-Tocopherol | 24 IE/kg |
| Vitamin $K_3$ | 10 ppm |
| Riboflavin | 7 ppm |
| Pyridoxin | 1 ppm |
| Pantothensäure | 17 ppm |
| Nikotinsäure | 80 ppm |
| Folsäure | 0,2 ppm |
| Cholinchlorid | 450 ppm |
| Cyanocobalamin | 15 ppm |

Die Kontrollgruppe erhielt das Futter ohne Zusatz von Alkansulfonat. Dem Trockenfutter der Tiergruppe 2 wurde 0,08 %, der Tiergruppe 3 0,4 % und der Gruppe 4 2 % eines Gemisches zugesetzt, das aus Tridecyl- bis Heptadecylsulfonat bestand, das auch noch etwa 12 % der entsprechenden Bisulfonate enthielt.

Die Futteraufnahme war für die Kontrollgruppe, sowie die Tiergruppen 2 bis 4 praktisch gleich und lag z.B. für die Tiere im ersten Jahr zwischen 23,8 bis 26,6 g/Ratte und Tag und im zweiten Jahr zwischen 28,3 bis 29,4 g/Ratte und Tag.

Das Trockenfutter mit Alkansulfonaten wurde wöchentlich frisch angesetzt. Dabei wurde unbehandeltes Trockenfutter in einem Rotationsmischer 20 Minuten lang mit einem 60 %igen Slurry der Alkansulfonate versetzt, bis Homogenität erzielt war. Danach wurde über Nacht bei 30°C getrocknet.

Während des gesamten Versuchsablaufs wurde die Überlebensrate der Tiere festgestellt. Wie die folgende Tabelle zeigt, war eine sehr deutliche Steigerung der Überlebensrate be-

reits bei einem Zusatz von 0,4 % Alkansulfonat zu beobachten.

Nach 2 Jahren (104 Wochen) stellte sich die Überlebensrate
folgendermaßen dar:

Blindversuch (Kontrollen):   9 Überlebende   = 18 %
bei 0,08 % Zusatz:          10 Überlebende   = 20 %
beo 0,4 % Zusatz:           12 Überlebende   = 24 %
bei 2 % Zusatz:             29 Überlebende   = 58 %

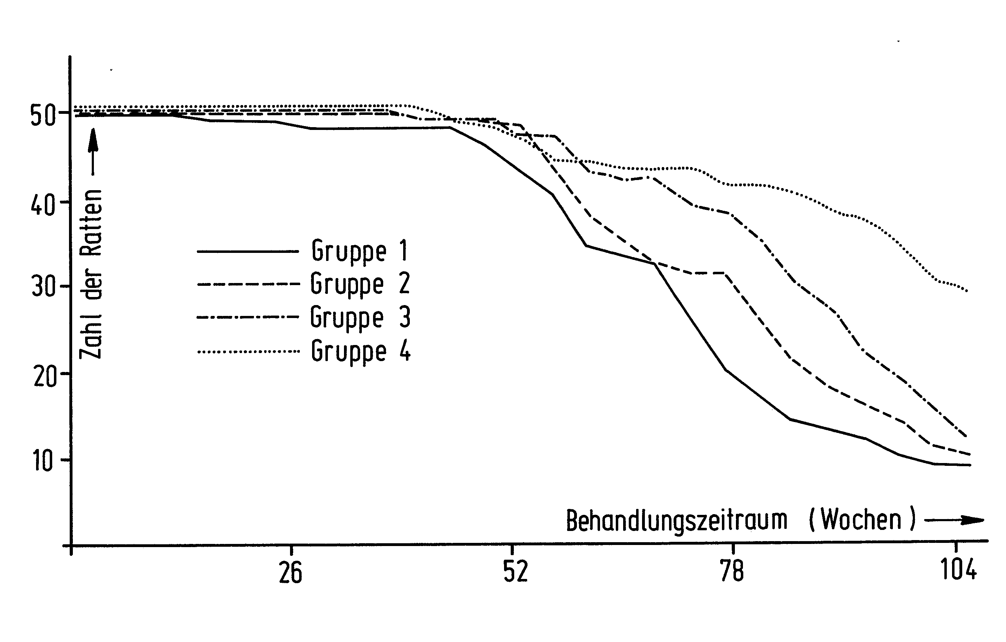

Eine graphische Darstellung der Ergebnisse ist der Figur
1 zu entnehmen.

Dieser erfindungsgemäß erzielbare Effekt war nicht voraussehbar und muß als ausgesprochen überraschend angesehen
werden.

Hundekuchen:

Einem aus 80 Teilen Weizenfuttermehl (evtl. Zumischung von
7 Teilen Weizenkeimlingen), 6 Teilen Heringsmehl, 5 Teilen
Knochenschrot, 4 Teilen Trockenhefe, 3 Teilen Magermilchpulver, 2 Teilen kohlensaurem Futterkalk und Spuren von
Fe, Cu und Mn hergestellten Teig werden 0,5 Teile eines
technischen Gemisches von Tridecyl- bis Heptadecylsulfonat
zugemischt. Anschließend wird der Teig gebacken und durch
Nachtrocknung lagerfähig gemacht.

Anstelle von 0,5 Teilen des Alkansulfonatgemisches können
auch 2 Teile eingesetzt werden.

Patentansprüche:

1. Tiernahrung, gekennzeichnet durch einen Gehalt an sekundären Alkansulfonaten, die sich von geradkettigen Paraffinkohlenwasserstoffen mit 10 bis 21 C-Atomen ableiten.

2. Tiernahrung gemäß Anspruch 1, dadurch gekennzeichnet, daß die Paraffinkohlenwasserstoffe 13 bis 17 C-Atome besitzen.

3. Tiernahrung gemäß Ansprüchen 1 und 2, dadurch gekennzeichnet, daß die Paraffinkohlenwasserstoffe bis zu etwa 30 % Di- und Polysulfonate enthalten.

4. Verfahren zur Herstellung von Tiernahrung gemäß Ansprüchen 1 bis 3, dadurch gekennzeichnet, daß man die Alkansulfonate mit flüssiger oder fester Tiernahrung oder mit galenischen Hilfs- und Zusatzstoffen mischt und gegebenenfalls in eine für die orale Verabreichung geeignete Applikationsform bringt.

5. Verfahren nach Anspruch 4, dadurch gekennzeichnet, daß die orale Applikationsform eine aus der Pharmazie bekannte Zubereitungsform ist.

6. Verwendung der in den Ansprüchen 1 bis 3 genannten Alkansulfonate zur Lebenverlängerung von Tieren.

7. Futterzusatzmittel, bestehend aus den in den Ansprüchen 1 bis 3 genannten Alkansulfonaten.

Zahl der Ratten

Gruppe 1
Gruppe 2
Gruppe 3
Gruppe 4

Behandlungszeitraum ( Wochen )

26    52    78    104

1/1

0021408

## EUROPÄISCHER RECHERCHENBERICHT

Europäisches Patentamt

0021408

Nummer der Anmeldung

EP 80 10 3569

| Kategorie | Kennzeichnung des Dokuments mit Angabe, soweit erforderlich, der maßgeblichen Teile | betrifft Anspruch |
|---|---|---|
| X | US - A - 2 340 063 (B.V. LAMB)<br>* Das ganze Dokument *<br><br>-- | 1-7 |
| X | CHEMICAL ABSTRACTS, Band 73, Nr. 23, 7. Dezember 1970, Ref.: 117864h, Seite 144<br>Columbus, Ohio, US<br>L.A. GRANOVA: "Comparative study of the effectiveness of some surfactants in chick raising"<br>& Ptakhivnitstvo 1969, Nr. 6, 64-7<br>* Das ganze Dokument *<br><br>-- | 1-7 |
| X | FETTE, SEIFEN, ANSTRICHMITTEL, Band 78, Nr. 5, Mai 1976, Seiten 200-206<br>Hamburg DE<br>J.N. QUACK et al.: "Sekundäres Alkansulfonat. Eigenschaften und Einsatzmöglichkeiten in kosmetischen Präparaten"<br>* Seite 202, rechte Spalte; Seite 203, linke Spalte *<br><br>---- | 1-5,7 |

**KLASSIFIKATION DER ANMELDUNG (Int.Cl. 3)**

A 23 K 1/16

**RECHERCHIERTE SACHGEBIETE (Int. Cl. 3)**

A 23 K 1/00
1/16

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 01-10-1980 | GALLIGANI |

EPA form 1503.1 06.78